# EUROPÄISCHE PATENTSCHRIFT

(11) **EP 0 719 290 B1**
(45) Veröffentlichungstag und Bekanntmachung des Hinweises auf die Patenterteilung: **13.08.1997**
(21) Anmeldenummer: 94927566.3
(22) Anmeldetag: 06.09.1994
(51) Int. Cl.: C08F 210/14, C08F 222/00, C08F 8/32

(54) **COPOLYMERISATE SOWIE DEREN REAKTIONSPRODUKTE MIT AMINEN ALS KRAFTSTOFF- UND SCHMIERSTOFFADDITIV**
COPOLYMERS AND THEIR REACTION PRODUCTS WITH AMINES SUITABLE AS FUEL AND LUBRICANT ADDITIVES
COPOLYMERES ET LEURS PRODUITS DE REACTION AVEC DES AMINES UTILES COMME ADDITIFS DE CARBURANTS ET DE LUBRIFIANTS

(30) Priorität: 13.09.1993 DE 4330971
(43) Veröffentlichungstag der Anmeldung: 03.07.1996
(73) Patentinhaber: BASF AKTIENGESELLSCHAFT, 67056 Ludwigshafen (DE)
(72) Erfinder: GÜNTHER, Wolfgang, D-67582 Mettenheim (DE); OPPENLÄNDER, Knut, D-67061 Ludwigshafen (DE); DENZINGER, Walter, D-67346 Speyer (DE); HARTMANN, Heinrich, D-67117 Limburgerhof (DE); MACH, Helmut, D-69115 Heidelberg (DE); SCHWAHN, Harald, D-69120 Heidelberg (DE); RATH, Hans, Peter, D-67269 Grünstadt (DE)
(86) Internationale Anmeldenummer: EP9402963
(87) Internationale Veröffentlichungsnummer: WO9507944

(56) Entgegenhaltungen:
- EP-A- 0 009 170
- EP-A- 0 009 185
- FR-A- 2 028 522
- GB-A- 2 065 676
- US-A- 4 184 993
- US-A- 4 240 916

## Beschreibung

Die vorliegende Erfindung betrifft neue, funktionelle Gruppen tragende Copolymerisate I aus
a) 20-60 mol-% mindestens einer monoethylenisch ungesättigten C₄-C₆-Dicarbonsäure oder deren Anhydrid,
b) 10-70 mol-% mindestens eines Oligomeren des Propens oder eines verzweigten 1-Olefins mit 4 bis 10 Kohlenstoffatomen und einem mittleren Molekulargewicht M_{w} von 300 bis 5000 und
c) 1-50 mol-% mindestens einer monoethylenisch ungesättigen Verbindung, die mit den Monomeren a) und b) copolymerisierbar ist,
sowie außerdem ein Verfahren zur Herstellung dieser Verbindungen I. Weiterhin betrifft sie aus den Copolymerisaten I durch Umsetzung mit einem Amin erhältliche, öllösliche Reaktionsprodukte II, ein Verfahren zu ihrer Herstellung, die Verwendung der Verbindungen II und Kraft- und Schmierstoffe, die diese Verbindungen enthalten.

Die WO-A 90/03359 beschreibt Polymerisate, die als Zusätze in Schmierölen verwendet werden und dispergierende Eigenschaften für darin enthaltende Schlamm- und Feststoffteilchen besitzen. Außerdem weisen die Polymerisate Viskositätsindex-verbessernde Eigenschaften auf, d.h. sie sorgen dafür, daß die Viskosität eines Schmieröls, das diese Verbindung enthält, bei Temperaturerhöhung deutlich weniger abfällt als in Ölen ohne einen solchen Zusatz.

Diese Polymerisate sind aus zwei Monomergruppen aufgebaut, nämlich zum einen aus Maleinsäure oder Fumarsäure oder Derivaten dieser Verbindungen und zum anderen aus einem Olefin, dessen Molekulargewicht hinreichend groß ist, daß das aus diesen Monomeren hergestellte Polymerisat öllöslich ist. In Mengen von mindestens 20 % muß das Olefin Alkylvinylidengruppen tragen.

Die in der Druckschrift offenbarten Polymerisate zeigen nicht für alle Anwendungsgebiete befriedigende Eigenschaften, insbesondere läßt das Viskositäts-Temperatur-Verhalten von Schmierölen, die diese Polymerisate als Zusatz enthalten, noch zu wünschen übrig.

Weiterhin befriedigt die Dispergierwirkung dieser Verbindungsklasse in der technischen Anwendung nicht in allen Fällen.

Es stellte sich daher die Aufgabe, Additive für Schmieröle zur Verfügung zu stellen, die diesen Nachteilen abhelfen.

Demgemäß wurden die eingangs definierten Copolymerisate gefunden.

Außerdem wurden ein Verfahren zu ihrer Herstellung, aus diesen Copolymerisaten I durch Umsetzung mit einem Amin erhältliche Reaktionsprodukte II, ein Verfahren zu deren Herstellung und die Verwendung der Reaktionsprodukte II gefunden. Weiterhin wurden Schmier- und Kraftstoffe gefunden, die diese Verbindungen enthalten.

Im folgenden werden die für die Verwendung der Copolymerisate I als Zwischenprodukte für die Herstellung von Schmieröladditiven besonders vorteilhaften Ausführungsformen beschrieben.

Die Copolymerisate I sind aus den Monomeren a) bis c) aufgebaut.

### Monomer a)

Als Monomere a) kommen monoethylenisch ungesättigte Dicarbonsäuren mit 4 bis 6 Kohlenstoffatomen in Frage, wie Maleinsäure, Fumarsäure, Itaconsäure, Mesaconsäure, Methylenmalonsäure, Citraconsäure, Maleinsäureanhydrid, Itaconsäureanhydrid, Citraconsäureanhydrid und Methylenmalonsäureanhydrid und deren Mischungen untereinander. Bevorzugt ist Maleinsäureanhydrid.

### Monomer b)

Als Monomer b) kommen Oligomere des Propens oder eines verzweigten 1-Olefins mit 4 bis 10 Kohlenstoffatomen in Betracht. Diese Oligomere sind aus mindestens 3 Olefinmolekülen aufgebaut. Ihr mittleres Molekulargewicht M_{w} beträgt 300 bis 5000 g/mol. Es sind beispielsweise Oligomere des Propens, Isobutens sowie kettenverzweigter Isomere des Pentens, Hexens, Oktens und Decens zu nennen, wobei die copolymerisierbare Endgruppe des Oligomeren in Form einer Vinyl-, Vinyliden- oder Alkylvinylidengruppe vorliegt. Bevorzugt sind Oligopropene und Oligopropengemische mit 9 bis 200 C-Atomen sowie besonders Oligoisobutene, wie sie z.B. nach der Lehre der DE-A 27 02 604 erhältlich sind. Auch Mischungen der genannten Oligomere kommen in Betracht. Die Molekulargewichte der Oligomeren können in an sich bekannter Weise durch Gelpermeations-Chromatographie bestimmt werden.

### Monomer c)

Als Monomer c) kommen alle solche Monomere in Betracht, die mit den Monomeren a) und b) copolymerisierbar sind.

Beispielsweise sind dies lineare 1-Olefine mit 2 bis 40 Kohlenstoffatomen, bevorzugt mit 8 bis 30 Kohlenstoffatomen, wie Decen, Dodecen, Oktadecen und technische Mischungen aus C₂₀-C₂₄-1-Olefinen und C₂₄-C₂₈-1-Olefinen.

Als Monomere c) kommen ebenso monoethylenisch ungesättigte C₃-C₁₀-Monocarbonsäuren in Frage wie Acrylsäure, Methacrylsäure, Dimethacrylsäure, Ethylacrylsäure, Crotonsäure, Allylessigsäure und Vinylessigsäure, von denen Acrylsäure und Methacrylsäure bevorzugt sind.

Weiterhin kommen Vinyl- und Allylalkylether mit 1 bis 40 Kohlenstoffatomen im Alkylrest in Betracht, wobei der Alkylrest noch weitere Substituenten wie eine Hydroxygruppe, eine Amino- oder Dialkylaminogruppe oder einen Alkoxyrest tragen kann. Beispielsweise seien Methylvinylether, Ethylvinylether, Propylvinylether, Isobutylvinylether, 2-Ethylhexylvinylether, Decylvinylether, Dodecylvinylether, Octadecylvinylether, 2-(Diethylamino)ethylvinylether, 2-(Di-n-butylamino)ethylvinylether, sowie die entsprechenden Allylether genannt.

Eine weitere Gruppe von Monomeren sind C₁- bis C₄₀-Alkylester, Amide und C₁-C₄₀-N-Alkylamide von monoethylenisch ungesättigten C₃- bis C₁₀-Mono- oder Dicarbonsäuren wie Ethylacrylat, Butylacrylat, 2-Ethylhexylacrylat, Decylacrylat, Dodecylacrylat, Oktadecylacrylat sowie die Ester von technischen Alkoholgemischen mit 14 bis 28 Kohlenstoffatomen, Ethylmethacrylat, 2-Ethylhexylmethacrylat, Decylmethacrylat, Oktadecylmethacrylat, Maleinsäuremonobutylester, Maleinsäuredibutylester, Maleinsäuremonodecylester, Maleinsäuredidodecylester, Maleinsäuremonooktadecylester, Maleinsäuredioktadecylester, Dimethylaminoethylacrylat, Diethylaminoethylacrylat, Dibutylaminoethylmethacrylat, Acrylamid, Methacrylamid, N-tert.-Butylacrylamid, N-Oktylacrylamid, N,N'-Dibutylacrylamid, N-Dodecylmethacrylamid und N-Oktadecylmethacrylamid.

Weiterhin können Vinyl- und Allylester von C₁- bis C₃₀-Monocarbonsäuren mit den Monomeren a) und b) copolymerisiert werden. Im einzelnen handelt es sich dabei zum Beispiel um Vinylformiat, Vinylacetat, Vinylpropionat, Vinylbutyrat, Vinyllaurat, Vinylstearat, Vinylpivalat, Allylacetat, Allylbutyrat und Allylstearat.

Außerdem sind N-Vinylcarbonsäureamide von Carbonsäuren mit 1 bis 8 Kohlenstoffatomen wie N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid geeignet. Weiterhin sind N-Vinylverbindungen von stickstoffhaltigen Heterocyclen wie N-Vinylimidazol, N-Vinylmethylimidazol, N-Vinylpyrrolidon und N-Vinylcaprolactam zu nennen.

Weiterhin kommen Mischungen der genannten Monomeren als Baustein für die Copolymerisate in Betracht.

Bevorzugt von diesen Monomeren werden Acrylsäure, Methacrylsäure, C₁₆-Olefine, C₂₀₋₂₄-Olefine, C₁₄-C₂₀-Alkylvinylether und C₁₄-C₂₀-Alkylester von monoethylenisch ungesättigten C₃-C₆-Mono- und Dicarbonsäuren.

Die Copolymerisate I enthalten die Monomeren a) bis c) in Mengen von 20 bis 60 mol-% Monomer a), 10 bis 70 mol-% Monomer b) und 1 bis 50 mol-% Monomer c).

Die Copolymerisate können nach allen bekannten üblichen Polymerisationsverfahren hergestellt werden, z.B. durch Substanz-, Emulsions-, Suspensions-, Fällungs- und Lösungspolymerisation. Bei allen genannten Polymerisationsverfahren wird unter Ausschluß von Sauerstoff gearbeitet, vorzugsweise in einem Stickstoffstrom. Für alle Polymerisationsmethoden werden die üblichen Apparaturen verwendet, z.B. Autoklaven und Kessel. Besonders bevorzugt ist die Substanzpolymerisation der Monomeren der Gruppen a) bis c). Sie kann bei Temperaturen von 80 bis 300, vorzugsweise von 120 bis 200°C durchgeführt werden, wobei die niedrigste zu wählende Polymerisationstemperatur vorzugsweise etwa mindestens 20°C über der Glastemperatur des gebildeten Polymeren liegt. Je nach Molekulargewicht, das die Copolymerisate haben sollen, werden die Polymerisationsbedingungen gewählt. Polymerisation bei hohen Temperaturen ergibt Copolymerisate mit niedrigen Molekulargewichten, während bei niedrigeren Polymerisationstemperaturen Polymerisate mit höheren Molekulargewichten entstehen.

Die Copolymerisation wird vorzugsweise in Gegenwart von Radikale bildenden Verbindungen durchgeführt. Man benötigt von diesen Verbindungen bis zu 10, vorzugsweise 0,2 bis 5 Gew.-%, bezogen auf die bei der Copolymerisation eingesetzten Monomeren. Geeignete Polymerisationsinitiatoren sind beispielsweise Peroxidverbindungen wie tert.-Butylperpivalat, tert.- Butylperneodekanoat, tert.-Butylperethylhexanoat, tert.-Butylperisobutyrat, Ditert.-butylperoxid, Di-tert.-Amylperoxid, Diacetylperoxidicarbonat, Dicyclohexylperoxidicarbonat oder Azoverbindungen wie 2,2'-Azobis(isobutyronitril). Die Initiatoren können allein oder in Mischung untereinander angewendet werden. Auch Redox-Co-Initiatoren können mitverwendet werden. Sie werden bei der Substanzpolymerisation vorzugsweise separat oder in Form einer Lösung in den Polymerisationsreaktor eingebracht. Die Monomeren a), b) und c) können bei Temperaturen von oberhalb 200°C auch in Abwesenheit von Polymerisationsinitiatoren copolymerisiert werden.

Um niedrigmolekulare Polymerisate herzustellen ist es oft zweckmäßig, die Copolymerisation in Gegenwart von Reglern durchzuführen. Hierfür können übliche Regler verwendet werden, wie C₁- bis C₄-Aldehyde, Ameisensäure und organische SH-Gruppen enthaltende Verbindungen, wie 2-Mercaptoethanol, 2-Mercaptopropanol, Mercaptoessigsäure, tert.-Butylmercaptan, n-Oktylmercaptan, n-Dodecylmercaptan und tert.-Dodecylmercaptan. Die Polymerisationsregler werden im allgemeinen in Mengen von 0,1 bis 10 Gew.-%, bezogen auf die Monomeren eingesetzt.

Um höhermolekulare Copolymerisate herzustellen, ist es oft zweck- mäßig, bei der Polymerisation in Gegenwart von Kettenverlängerern zu arbeiten. Solche Kettenverlängerer sind Verbindungen mit zwei- oder mehrfach ethylenisch ungesättigten Gruppen wie Divinylbenzol, Pentaerythrittriallylether, Ester von Glykolen wie Glykoldiacrylat, Glycerintriacrylat und Polyethylenglykoldiacrylate. Sie können bei der Polymerisation in Mengen bis zu 5 Gew.-% zugesetzt werden.

Die Copolymerisation kann kontinuierlich oder diskontinuierlich durchgeführt werden. Die Molmassen der Produkte liegen in der Regel bei 1000 bis 50 000 g/mol.

Die Copolymerisate I können mit Aminen der Formel HNR¹R² zu den stickstoffhaltigen Reaktionsprodukten II umgesetzt werden. Die Reste R¹ und R² können gleich oder verschieden sein. Als Aminkomponente kommen in Betracht
- Ammoniak
- aliphatische und aromatische, primäre und sekundäre Amine mit 1 bis 50 Kohlenstoffatomen wie Methylamin, Ethylamin, Propylamin, Di-n-butylamin, Cyclohexylamin,
- Amine, in denen R¹ und R² mit dem Stickstoffatom, an das sie gebunden sind, einen gemeinsamen Ring bilden, der noch weitere Heteroatome enthalten kann, wie Morpholin, Pyridin, Piperidin, Pyrrol, Pyrimidin, Pyrrolin, Pyrrolidin, Pyrazin und Pyridazin,
- Aminoalkylen-, Polyaminoalkylen-, Hydroxyalkylen- und Polyoxyalkylenreste tragende Amine, in denen R¹ und/oder R² für einen Rest 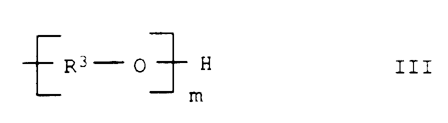 stehen, wobei R³ einen C₂-C₁₀-Alkylenrest bedeutet und m eine ganze Zahl von 1 bis 30 ist, wie Ethanolamin, 2-Aminopropanol-1, Neopentanolamin,
- Aminoendgruppen tragende Polyoxyalkylenamine, in denen R¹ und/oder R² für einen Rest 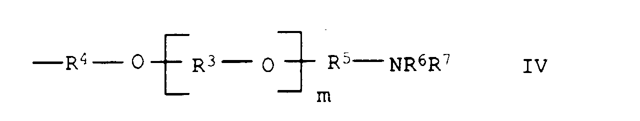 steht, wobei R³, R⁴, R⁵ für C₂-C₁₀-Alkylenreste stehen, m die oben angegebene Bedeutung hat und R⁶ und R⁷ für Wasserstoff, gegebenenfalls Hydroxy- oder Amino-substituiertes C₁-C₁₀-Alkyl oder C₆-C₁₀-Aryl steht, wie Polyoxypropylendiamine und Bis(3-aminopropyl)tetrahydrofurane.

Bevorzugt werden als Aminkomponente d) Polyamine, in denen R¹ und/ oder R² für einen Rest der Formel V 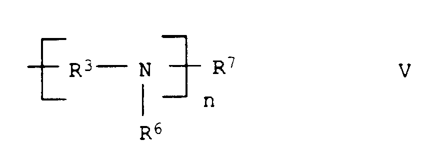 stehen, in der die Reste R³, R⁶ und R⁷ die oben angegebene Bedeutung haben und n eine ganze Zahl von 1 bis 6 ist. Als Polyamine kommen in Betracht: Ethylendiamin, Propylendiamin, Dimethylaminopropylamin, Diethylentriamin, Dipropylentriamin, Triethylentetramin, Tripropylentetramin, Tetraethylenpentamin, Ethylaminoethylamin, Dimethylaminoethylamin, Isopropylaminopropylamin, Ethylendipropylentetramin, 2-Di-isopropylaminoethylamin, Aminoethylethanolamin, Ethylenpropylentriamin, N,N,N',N'-Tetra-(3-aminopropyl)-ethylendiamin, 2-(3-Aminopropyl)cyclohexylamin, 2,5-Dimethylhexandiamin-2,5, N,N,N',N", N"-Penta-(3-aminopropyl)-dipropylentriamin. Weiterhin sind Polyamine bevorzugt, die einen Heterocyclus als Strukturbestandteil enthalten, wie Aminoethylpiperazin.

Als Aminkomponente können auch Mischungen verschiedener Amine eingesetzt werden.

Die erfindungsgemäßen Reaktionsprodukte II werden in an sich bekannter Weise durch Umsetzung von Copolymerisaten I mit den genannten Aminen erhalten. Das molare Verhältnis der Komponenten hängt von der Zahl der Säure- bzw. Anhydridgruppen im Copolymerisat I ab. Diese kann in bekannter Weise z.B. durch Titration mit einer starken Base bestimmt werden. Im allgemeinen werden pro Mol Amin 0,1 bis 3 Äquivalente Säure- oder Anhydridgruppen im Polymer eingesetzt. In der Regel werden die Ausgangsmaterialien zur Reaktion vermischt und auf 30 bis 200°C erhitzt. Vorzugsweise erfolgt die Reaktion unter einer Schutzgasatmosphäre. Die Reaktion kann ohne oder in Lösungsmitteln vorgenommen werden. Als inerte Lösungsmittel sind aliphatische und aromatische Kohlenwasserstoffe wie Toluol und Xylol ebenso zu nennen wie Mineralöle. Der Fortgang der Reaktion kann IR-spektroskopisch verfolgt werden.

Die stickstoffhaltigen Reaktionsprodukte II können als Additive für Schmierstoffe und Kraftstoffe verwendet werden.

Bei den Schmierstoffen handelt es sich um additivierte synthetische, teilsynthetische und mineralische Öle, vorzugsweise solche, die als Motorenöle Verwendung finden. Die synthetischen Öle umfassen synthetische Ester und Polymere von α-Olefinen. Die Reaktionsprodukte II werden den Schmierstoffen im allgemeinen als Konzentrat in einem inerten Lösungsmittel wie einem Mineralöl zugesetzt. Diese Konzentrate können weitere übliche Zusätze wie Rostinhibitoren, Verschleißschutz, Detergentien, Antioxidantien und Stockpunktverbesserer enthalten.

Die Reaktionsprodukte II werden den Schmierstoffen in Mengen von 1 bis 15 Gew.-%, bevorzugt in Mengen von 0,5 bis 10 Gew.-% zugesetzt.

In Kraftstoffen wie Ottobenzin oder Dieselkraftstoff werden die Reaktionsprodukte II als Detergentien zur Reinhaltung des Einlaßsystems eingesetzt. Aufgrund ihrer dispergierenden Eigenschaften wirken sie sich auch positiv auf Motorschmierstoffe aus, in die sie während des Motorbetriebs gelangen können. Es werden dazu 20 bis 5000 ppm, besonders bevorzugt 50 bis 1000 ppm, bezogen auf den Kraftstoff, zugesetzt.

### Beispiele

### 1. Herstellung der Copolymerisate I

### Allgemeine Herstellvorschrift

Die Monomeren b) und gegebenenfalls c) (Vorlage)wurden in einem Reaktor im schwachen Stickstoffstrom auf 150°C erhitzt und innerhalb von 4 Std. die Monomeren a) (in flüssiger Form als Schmelze von ca. 70°C) und gegebenenfalls c) (Zulauf)und innerhalb von 4,5 Std. eine Lösung von Ditertiärbutylperoxid, gelöst in 25 g o-Xylol, bei 150°C zudosiert. Anschließend wurde noch 1 Std. bei 150°C nacherhitzt.

Die Molmasse der Copolymeren wurde mit Hilfe der Hochdruck-Gel-Permeationschromatographie bestimmt. Als Elutionsmittel diente Tetrahydrofuran. Die Eichung erfolgte mit eng verteilten Fraktionen von Polystyrol.

Details zu den Reaktionen können Tabelle 1 entnommen werden.

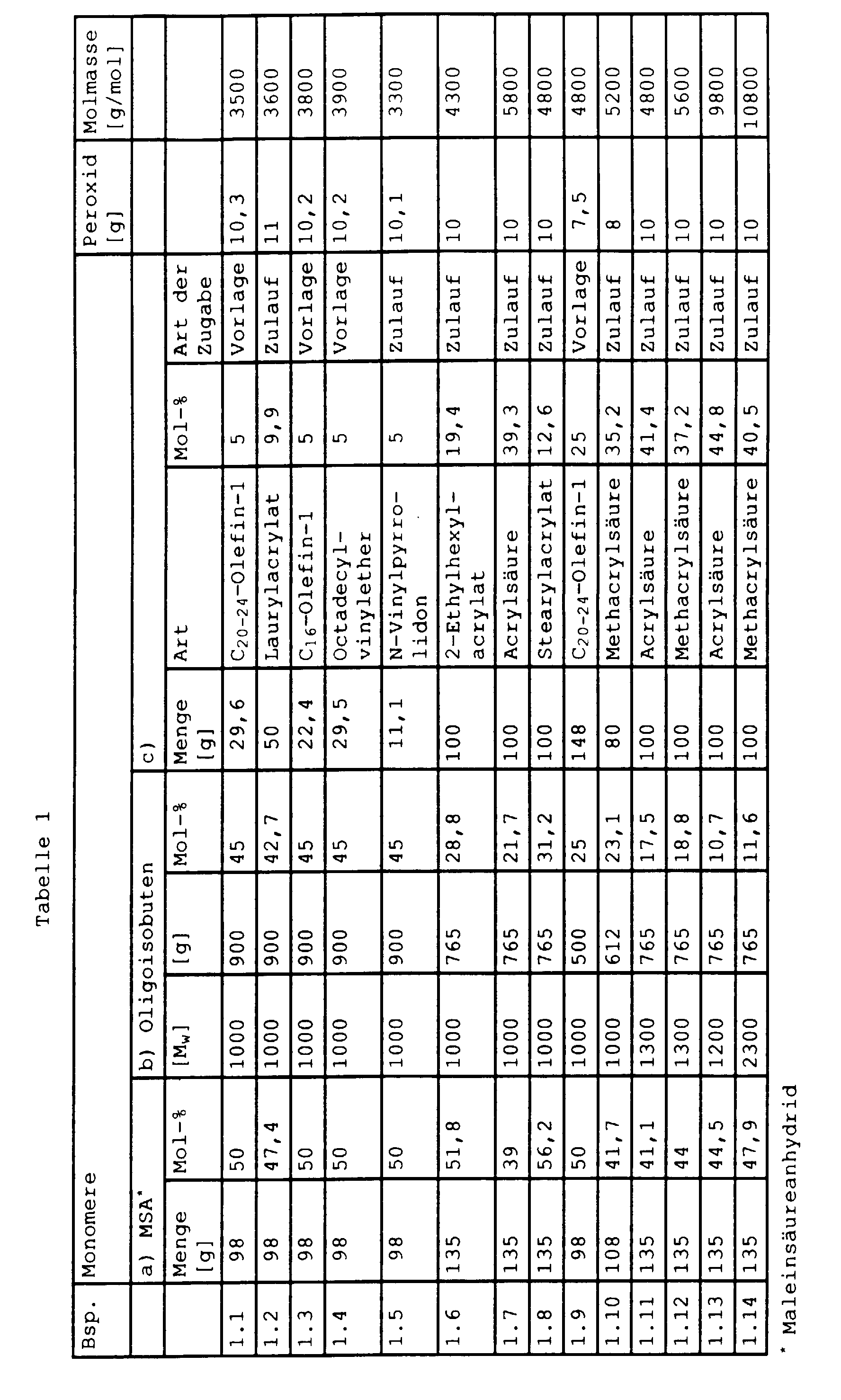

### 2. Herstellung der öllöslichen Reaktionsprodukte II

### Allgemeine Herstellvorschrift:

Ein Polymer gemäß den Beispielen 1 wurde in Xylol bei 70°C vorgelegt, mit einem Amin bzw. Polyamin versetzt und unter Rückfluß erhitzt, bis die zu erwartende Menge Reaktionswasser abgeschieden war. Nach Entfernung des Lösungsmittels fiel das Produkt in Form eines hellgelben bis bernsteinfarbenen, viskosen Rückstandes an. Die IR-Absorptionsbanden der Produkte lagen bei ca. 1770 und 1700 cm⁻¹. Wie in Tabelle 2 angegeben, wurden folgende Umsetzungen gemacht:

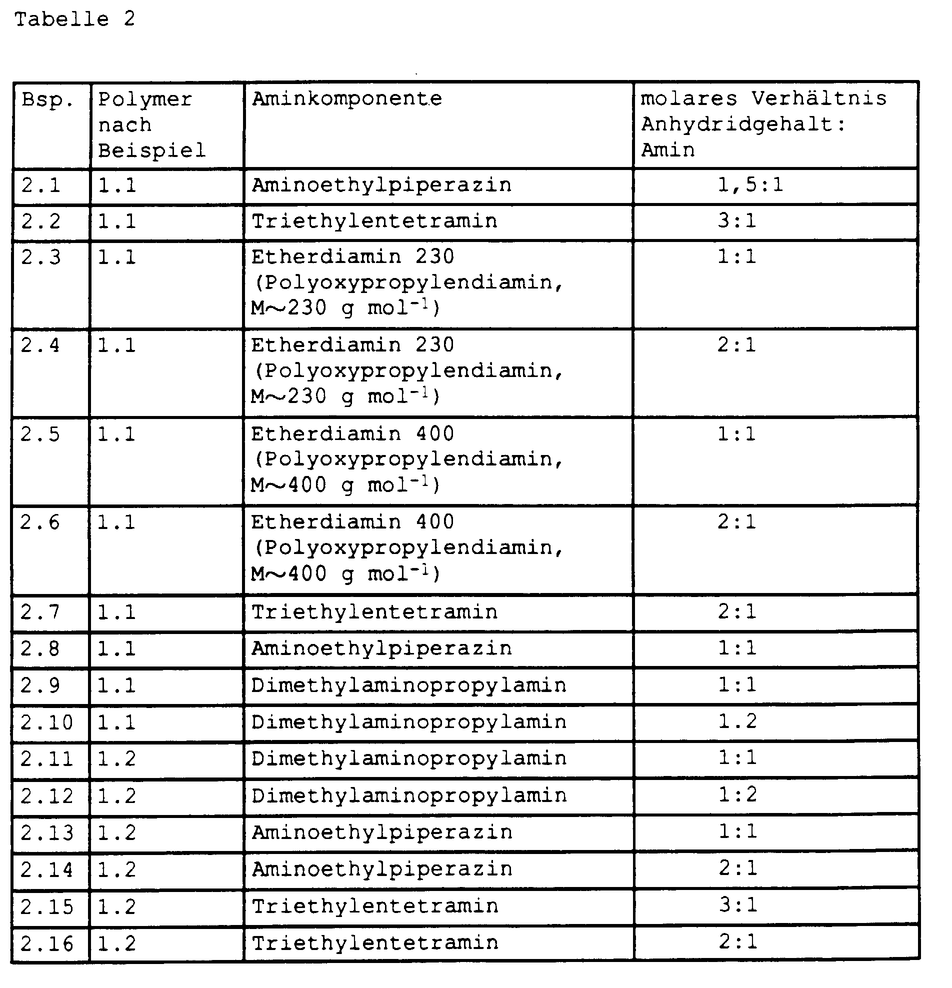

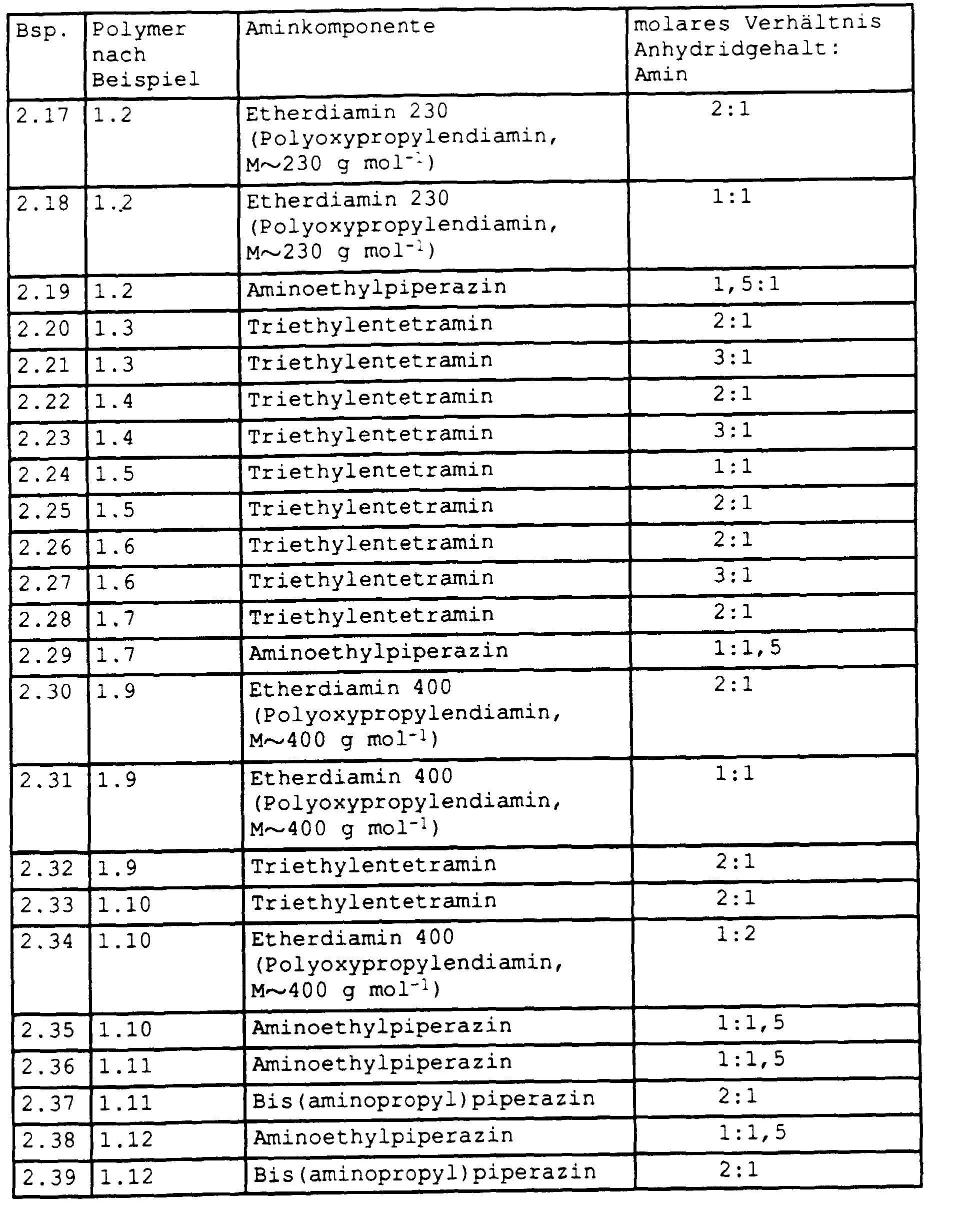

### 3. Vergleich

### Vergleichsadditiv V1: Reaktionsprodukt aus Copolymerisat nach Beispiel 6 der WO-A 90/03359 und Triethylentetramin TETA

Die genannten Ausgangsstoffe wurden in Analogie zu den Beispielen 2 im molaren Verhältnis von 1:1 umgesetzt.

### Vergleichsadditiv V2: Reaktionsprodukt aus Copolymerisat nach Beispiel 6 der WO-A 90/03359 und TETA

Die genannten Ausgangsstoffe wurden wie in den Beispielen 2 im molaren Verhältnis von 2:1 umgesetzt.

### 4. Prüfung des Viskosität-Temperatur-Verhaltens

Die Additive wurden in einer Konzentration von 6 Gew.-% in einem 5 W-30-Motoröl getestet:

| Additiv nach Beispiel | Viskosität 100°C [mm²s⁻¹] Ubbelohde | Viskosität -25°C [mPas] CCS | Löslichkeit |
|---|---|---|---|
| - | 7,55 | 1900 | - |
| 2.28 | 9,71 | 2940 | klar |
| 2.33 | 9,79 | 3065 | klar |
| V1 | 9,00 | 3100 | trüb |
| V2 | 9,19 | 3200 | trüb |

Die erfindungsgemäßen Additive sind denen nach dem Stand der Technik nicht nur bei hoher Temperatur wegen ihrer viskositätserhöhenden Wirkung überlegen, sondern sorgen auch bei tiefer Temperatur für die gewünschte Eigenschaft, d.h. eine möglichst niedrige Viskosität.

### 5. Prüfung der Dispergierwirkung

Zur Prüfung der Dispergierwirkung wurde ein Tüpfeltest durchgeführt, wie er in "Les Huiles pour Moteurs et la Graissage des Moteurs", A. Schilling, Vol. 1, S. 89 f, 1962 beschrieben ist. Es wurden dazu 3 gew.-%ige Mischungen der Additive in einem Dieselrußöl hergestellt. Die so erhaltenen Dispersionen wurden auf einem Filterpapier wie ein Chromatogramm entwikkelt. Die Werteskala reicht von 0-1000: je höher der erzielte Wert, desto besser die Dispergierwirkung des Additivs.

### Probenvorbereitung:

| Additiv nach Beispiel | 10 min bei RT ohne Wasser | 10 min bei RT 1 % Wasser | 10 min bei 250°C ohne Wasser | 10 min bei 250°C mit Wasser |
|---|---|---|---|---|
| 2.28 | 635 | 632 | 650 | 682 |
| 2.33 | 636 | 634 | 679 | 675 |
| V1 | 583 | 593 | 511 | 603 |
| V2 | 570 | 686 | 605 | 558 |
| RT = Raumtemperatur | | | | |

Die erfindungsgemäßen Additive zeigen in allen Fällen eine deutlich bessere Dispergierwirkung als die Additive nach dem Stand der Technik.

## Patentansprüche

1. Funktionelle Gruppen tragende Copolymerisate I aus
a) 20-60 mol-% mindestens einer monoethylenisch ungesättigten C₄-C₆-Dicarbonsäure oder deren Anhydrid,
b) 10-70 mol-% mindestens eines Oligomeren des Propens oder eines verzweigten 1-Olefins mit 4 bis 10 Kohlenstoffatomen und einem mittleren Molekulargewicht M_{w} von 300 bis 5000 und
c) 1-50 mol-% mindestens einer monoethylenisch ungesättigen Verbindung, die mit den Monomeren a) und b) copolymerisierbar ist.

2. Copolymerisate nach Anspruch 1, die Oligoisobutene als Monomer b) enthalten.

3. Copolymerisate nach Anspruch 1 oder 2, erhältlich aus
- monoethylenisch ungesättigten C₃-C₁₀-Monocarbonsäuren
- linearen 1-Olefinen mit 2 bis 40 Kohlenstoffatomen
- Vinyl- und Alkylallylethern mit 1 bis 40 Kohlenstoffatomen im Alkylrest
als Monomer (c).

4. Verfahren zur Herstellung von funktionelle Gruppen tragenden Copolymerisaten I gemäß Anspruch 1, dadurch gekennzeichnet, daß man
a) 20-60 mol-% mindestens einer monoethylenisch ungesättigten C₄-C₆-Dicarbonsäure oder deren Anhydrid,
b) 10-70 mol-% mindestens eines Oligomeren des Propens oder eines verzweigten 1-Olefins mit 4 bis 10 Kohlenstoffatomen und einem mittleren Molekulargewicht M_{w} von 300 bis 5000 und
c) 1-50 mol-% mindestens einer monoethylenisch ungesättigen Verbindung, die mit den Monomeren a) und b) copolymerisierbar ist,
radikalisch polymerisiert.

5. Öllösliche Reaktionsprodukte II auf der Basis von Copolymerisaten I gemäß den Ansprüchen 1 bis 3, erhältlich durch Umsetzung der Copolymerisate I mit
d) einem Amin der Formel HNR¹R², wobei die Reste R¹ und R² gleich oder verschieden sein können und für Wasserstoff, aliphatische oder aromatische Kohlenwasserstoffreste, primäre oder sekundäre, aromatische oder aliphatische Aminoalkylenreste, Polyaminoalkylenreste, Hydroxyalkylenreste, Polyoxyalkylenreste, die gegebenenfalls Aminoendgruppen tragen, Heteroaryl- oder Heterocyclylreste, die gegebenenfalls Aminoendgruppen tragen, stehen können, oder gemeinsam mit dem Stickstoffatom, an das sie gebunden sind, einen Ring bilden, in dem noch weitere Heteroatome vorhanden sein können.

6. Öllösliche Reaktionsprodukte II nach Anspruch 5, erhältlich aus Ethylendiamin, Propylendiamin, Dimethylaminopropylamin, Diethylentriamin, Dipropylentriamin oder Triethylentetramin
als Aminkomponente (d).

7. Verfahren zur Herstellung von Reaktionsprodukten II gemäß den Ansprüchen 5 oder 6, dadurch gekennzeichnet, daß man Copolymerisate I gemäß den Ansprüchen 1 bis 3 mit
d) einem Amin der Formel HNR¹R², wobei die Reste R¹ und R² gleich oder verschieden sein können und für Wasserstoff, aliphatische oder aromatische Kohlenwasserstoffreste, primäre oder sekundäre, aromatische oder aliphatische Aminoalkylenreste, Polyaminoalkylenreste, Hydroxyalkylenreste, Polyoxyalkylenreste, die gegebenenfalls Aminoendgruppen tragen, Heteroaryl- oder Heterocyclylreste, die gegebenenfalls Aminoendgruppen tragen, stehen können, oder gemeinsam mit dem Stickstoffatom, an das sie gebunden sind, einen Ring bilden, in dem noch weitere Heteroatome vorhanden sein könnnen,
umsetzt.

8. Verwendung der Reaktionsprodukte II gemäß den Ansprüchen 5 und 6 als Additiv für Schmierstoffe und Kraftstoffe.

9. Schmierstoffe, enthaltend 1 bis 15 Gew.-% der Reaktionsprodukte II gemäß den Ansprüchen 5 und 6.

10. Kraftstoffe, enthaltend 20 bis 5000 ppm der Reaktionsprodukte II gemäß den Ansprüchen 5 und 6.

## Claims

1. A copolymer I carrying functional groups and comprising
a) 20-60 mol% of at least one monoethylenically unsaturated C₄-C₆-dicarboxylic acid or an anhydride thereof,
b) 10-70 mol% of at least one oligomer of propene or of a branched 1-olefin of 4 to 10 carbon atoms, having an average molecular weight M_{w} of from 300 to 5000, and
c) 1-50 mol% of at least one monoethylenically unsaturated compound which is copolymerizable with the monomers a) and b).

2. A copolymer as claimed in claim 1, which contains an oligoisobutene as the monomer b).

3. A copolymer as claimed in claim 1 or 2, obtainable from
- monoethylenically unsaturated C₃-C₁₀-monocarboxylic acids,
- linear 1-olefins of 2 to 40 carbon atoms or
- vinyl or alkyl allyl ethers where the alkyl radical is of 1 to 40 carbon atoms
as monomer (c).

4. A process for the preparation of a copolymer I carrying functional groups, as claimed in claim 1, wherein
a) 20-60 mol% of at least one monoethylenically unsaturated C₄-C₆-dicarboxylic acid or an anhydride thereof,
b) 10-70 mol% of at least one oligomer of propene or of a branched 1-olefin of 4 to 10 carbon atoms, having an average molecular weight M_{w} from 300 to 5000, and
c) 1-50 mol% of at least one monoethylenically unsaturated compound which is copolymerizable with the monomers a) and b)
are subjected to free radical polymerization.

5. An oil-soluble reaction product II based on a copolymer I as claimed in any of claims 1 to 3, obtainable by reacting the copolymer I with
d) an amine of the formula HNR¹R², where R¹ and R² may be identical or different and may each be hydrogen, an aliphatic or aromatic hydrocarbon radical, a primary or secondary, aromatic or aliphatic aminoalkylene radical, a polyaminoalkylene radical, a hydroxyalkylene radical, a polyoxyalkylene radical which may carry terminal amino groups, or a hetaryl or heterocyclyl radical which may carry terminal amino groups, or, together with the nitrogen atom to which they are bonded, form a ring in which further heteroatoms may be present.

6. An oil-soluble reaction product II as claimed in claim 5, obtainable from ethylenediamine, propylenediamine, dimethylaminopropylamine, diethylenetriamine, dipropylenetriamine or triethylenetetramine
as amine component (d).

7. A process for the preparation of a reaction product II as claimed in claim 5 or 6, wherein a copolymer I as claimed in any of claims 1 to 3 is reacted with
d) an amine of the formula HNR¹R², where R¹ and R² may be identical or different and may each be hydrogen, an aliphatic or aromatic hydrocarbon radical, a primary or secondary, aromatic or aliphatic aminoalkylene radical, a polyaminoalkylene radical, a hydroxyalkylene radical, a polyoxyalkylene radical which may carry terminal amino groups, or a hetaryl or heterocyclyl radical which may carry terminal amino groups, or, together with the nitrogen atom to which they are bonded, form a ring in which further heteroatoms may be present.

8. Use of reaction product II as claimed in claims 5 and 6 as an additive for lubricants and fuels.

9. A lubricant containing from 1 to 15% by weight of reaction product II as claimed in claims 5 and 6.

10. A fuel containing from 20 to 5000 ppm of reaction product II as claimed in claims 5 and 6.

## Revendications

1. Copolymères I portant des groupements fonctionnels, composés de
a) 20 à 60% en moles d'au moins un acide dicarboxylique en C₄-C₆ à insaturation monoéthylénique ou de son anhydride,
b) 10 à 70% en moles d'au moins un oligomère du propène ou d'une 1-oléfine ramifiée à 4-10 atomes de carbone, ayant un poids moléculaire moyen M_{w} de 300 à 5000 et
c) 1 à 50% en moles d'au moins un composé à insaturation monoéthylénique qui est copolymérisable avec les monomères a) et b).

2. Copolymères selon la revendication 1, qui contiennent des oligoisobutènes en tant que monomère b).

3. Copolymères selon la revendication 1 ou 2, obtenus à partir
- d'acides monocarboxyliques en C₃-C₁₀ à insaturation monoéthylénique,
- de 1-oléfines linéaires à 2-40 atomes de carbone,
- d'éthers vinyliques et alkylallyliques à 1-40 atomes de carbone dans le reste alkyle,
en tant que monomère c).

4. Procédé de préparation de copolymères I portant des groupements fonctionnels selon la revendication 1, caractérisé en ce que l'on soumet à une polymérisation radicalaire
a) 20 à 60% en moles d'au moins un acide dicarboxylique en C₄-C₆ à insaturation monoéthylénique ou de son anhydride,
b) 10 à 70% en moles d'au moins un oligomère du propène ou d'une 1-oléfine ramifiée à 4-10 atomes de carbone, ayant un poids moléculaire moyen M_{w} de 300 à 5000 et
c) 1 à 50% en moles d'au moins un composé à insaturation monoéthylénique qui est copolymérisable avec les monomères a) et b).

5. Produits de réaction oléosolubles II à base de copolymères I selon l'une quelconque des revendications 1 à 3, obtenus par réaction des copolymères I avec
d) une amine de formule HNR¹R², les restes R¹ et R² pouvant être identiques ou différents et pouvant être mis pour des atomes d'hydrogène, des restes hydrocarbonés aliphatiques ou aromatiques, des restes aminoalkylène aromatiques ou aliphatiques, primaires ou secondaires, des restes polyaminoalkylène, des restes hydroxyalkylène, des restes polyoxyalkylène qui portent éventuellement des groupements amino terminaux ou des restes hétéroaryle ou hétérocyclyle qui portent éventuellement des groupements amino terminaux, ou formant ensemble, avec l'atome d'azote auquel ils sont fixés, un noyau dans lequel d'autres hétéroatomes peuvent être présents.

6. Produits de réaction oléosolubles II selon la revendication 5, obtenus à partir d'éthylènediamine, de propylènediamine, de diméthylaminopropylamine, de diéthylènetriamine, de dipropylènetriamine ou de triéthylènetétramine en tant que composant amine (d).

7. Procédé de préparation de produits de réaction II selon la revendication 5 ou 6, caractérisé en ce que l'on fait réagir des copolymères I selon l'une quelconque des revendications 1 à 3 avec
d) une amine de formule HNR¹R², les restes R¹ et R² pouvant être identiques ou différents et pouvant être mis pour des atomes d'hydrogène, des restes hydrocarbonés aliphatiques ou aromatiques, des restes aminoalkylène aromatiques ou aliphatiques, primaires ou secondaires, des restes polyaminoalkylène, des restes hydroxyalkylène, des restes polyoxyalkylène qui portent éventuellement des groupements amino terminaux ou des restes hétéroaryle ou hétérocyclyle qui portent éventuellement des groupements amino terminaux, ou formant ensemble, avec l'atome d'azote auquel ils sont fixés, un noyau dans lequel d'autres hétéroatomes peuvent être présents.

8. Utilisation des produits de réaction II selon la revendication 5 ou 6 comme additif pour des lubrifiants et des carburants.

9. Lubrifiants, contenant i à 15% en poids des produits de réaction II selon la revendication 5 ou 6.

10. Carburants, contenant 20 à 5000 ppm des produits de réaction II selon la revendication 5 ou 6.
